# EUROPEAN PATENT SPECIFICATION

(11) **EP 4 327 118 B1**
(45) Date of publication and mention of the grant of the patent: **20.08.2025**
(21) Application number: 21722141.5
(22) Date of filing: 22.04.2021
(51) Int. Cl.: G01S 7/48, G01S 7/481, G01S 17/42, G01S 17/10

(54) **OPTICAL ARRANGEMENT FOR LIGHT DETECTING SYSTEM**
OPTISCHE ANORDNUNG FÜR EIN LICHTERFASSUNGSSYSTEM
AGENCEMENT OPTIQUE DE SYSTÈME DE DÉTECTION DE LUMIÈRE

(43) Date of publication of application: 28.02.2024
(73) Proprietor: IRIDESENSE, 75005 Paris (FR)
(72) Inventor: BUCHTER, Scott, 02330 Espoo (FI)
(74) Representative: Argyma
(86) International application number: PCT/EP2021/060598
(87) International publication number: WO 2022/223125

(56) References cited:
- US-A1- 2008 074 640
- US-B1- 10 871 554
- US-B2- 9 823 351

## Description

### Technical Field

The invention relates to optical arrangements for light detecting systems, and more particularly, to optical arrangements comprising a multi-clad fiber.

### Background Art

Light detecting systems are used to illuminate an object and to detect a return light from said object, for instance in Light detection and ranging (LiDAR), spectrometer or imaging applications, for instance microscopy imaging.

Light detecting systems are known from e.g. US 2008/074640 A1, US 10 871 554 B1, and US 9 823 351 B2.

### 10 Technical Problem

For such light detecting systems, there is a need to generate a sufficient light power in order to enable a part of the illumination light which is returned to be detected.

Such a constraint traditionally leads to bulky optical arrangements, because of the use of a number of optical components, such as amplification stages and optical isolators, on both an illumination optical path and a return optical path.

### Disclosure of invention

Compared to the state of the art, it is proposed an optical arrangement which overcome the deficiencies of the prior art. The invention is defined by the independent claims.

The invention provides an optical arrangement for a light detecting system, the optical arrangement being configured:
- to steer an illumination beam along an illumination optical path from a laser source to a target to be sensed, in a transmitting direction, and
- to transmit a reflected beam along a return optical path from the target to an optical detector, in a receiving direction, wherein the reflected beam comprises a reflection of the illumination beam on the target.

The term "illumination beam" shall be construed as the complete beam running along the complete illumination optical path from the laser source to the target, whatever the spectral content therein.

The optical arrangement comprises :
- a transceiver arrangement comprising a dichroic beamsplitter, the transceiver arrangement being configured for:
   * transmitting a source beam from the laser source to a first end of an optical fiber arrangement, in one way selected among: through or by reflection on the dichroic beamsplitter, and
   * transmitting the reflected beam from said first end of the optical fiber arrangement to the optical detector in the other way selected among: through or by reflection on the dichroic beamsplitter,
- the optical fiber arrangement comprising a multi-clad optical fiber which comprises a core, at least one inner cladding, and an outer cladding; wherein
   said core is arranged to receive the source beam having a first wavelength, such that the source beam propagates in the core in said transmitting direction, and
   the core is further configured to generate a scanning beam from the source beam (11a) propagating in the core, wherein the scanning beam comprises at least a second wavelength which is different from the first wavelength, and
   said at least one inner cladding is configured to receive the reflected beam, comprising the at least second wavelength, such that the reflected beam propagates in the inner cladding in said receiving direction,
- a scanning unit optically coupled to a second end of the optical fiber arrangement, the scanning unit being configured to steer the scanning beam to said target, and to receive the reflected beam from the target.

In the optical arrangement, the illumination optical path and the return optical path share a common optical path portion by use of the multi-clad fiber. In other words, the return path is monolithically integrated in the architecture.

The term "source beam" designates the part of the illumination beam which has not been modified by the core of the multi-clad optical fiber. The term "scanning beam" designates the part of the illumination beam which results from the modification of the source beam by the core of the multi-clad optical fiber. In other words, the core transforms the source beam into the scanning beam.

Such an architecture has various advantages.

For instance,
- the optical alignment is eased. Indeed, when the scanning beam is collimated, the return signal alignment is automatically perfect.
- a free-space pumping allows detection of the return signal,
- the arrangement is polarization independent, so there is no polarization loss.
- The use of a fiber removes the need of aperturing, which enables 100% of the return signal to be usable.
- there is no need of multiple amplification stages,
- there is no need of multiple isolators because the amplified spontaneous emission (ASE) noise is very low,
- the number of optical components is lowered compared to traditional architectures, which enables the optical arrangement to be lighter and more compact,
- the X-talk may be lowered between the first wavelength component and counterpropagating second wavelength component.

Such an architecture may be advantageous for various applications, such as for medical or LiDAR applications.

Such an optical arrangement may comprise one or more of the features below described, or any combination thereof.

There are a variety of source beams features which may be selected for the optical arrangement. For instance, in embodiments, the source beam may be a continuous wave (CW) beam, as for instance a frequency modulation continuous wave (FMCW). By contrast, in embodiments, the source beam is a pulsed laser beam. For instance, the pulses of the source beam have a rate of 500kHz.

The optical arrangement may be provided in various manners. In embodiments, the optical arrangement may be provided uncoupled with a laser source and/ or to an optical detector. In embodiments, the optical arrangement comprises the laser source. In embodiments, the optical arrangement comprises the optical detector.

In embodiments, the source beam at the first end of an optical fiber arrangement is a monochromatic pulsed beam centered on the first wavelength, and having a full width at half maximum (FWHM) lower as 10nm, preferably lower as 1nm.

In embodiments, the at least second wavelength is shifted from the first wavelength by at least 300 nm.

In embodiments, the shifting is performed by Raman effect in the multi-clad fiber.

In embodiments, the first wavelength is 1064nm.

In embodiments, the dichroic beamsplitter has a high transmittance (HT) for wavelength higher as 1100 nm and a high reflectivity for wavelengths lower as 1100nm.

In embodiments, the core is further configured to generate a supercontinuum in a range comprising the second wavelength.
- In embodiments, the multi-clad optical fiber is a double-clad fiber.
- In an embodiment, the core mode field diameter (MFD) is 11µm. In another embodiment, the core MFD is a 20 µm and has a graded index and an aperture lower as 1.
- In embodiments, the inner cladding has a diameter higher or equal to 100µm.
- In embodiments, the multi-clad fiber is 10 meters long.

In embodiments, the supercontinuum comprises at least the spectral range [1450 nm-1650 nm], preferably a larger spectral range, such as for instance [1400 nm - 1700 nm].

Indeed, wavelengths below 1400 nm may be dangerous for eye safety.

In embodiments, the multi-clad optical fiber is selected such that a ratio of a P x L / D is above a threshold equal to 250W, wherein P denotes for a power peak of light of the monochromatic pulsed beam at one end of the multi-clad fiber, L denotes for a length of the multi-clad optical fiber, and D denotes for the diameter of the core of the multi-clad optical fiber.

In embodiments, the optical arrangement further comprises a notch filter or a wavelength bandpass filter arranged on the return optical path.

In embodiments, the notch filter or the wavelength bandpass filter is wavelength-tunable.

In embodiments, the notch filter or the wavelength bandpass filter are further configured to successively tune the wavelength to different wavelength values selected in the range of the supercontinuum. Thanks to these features, the reflected beam can be filtered in a wavelength-selective manner, such that a spectral response of the target may be detected by a spectral scanning.

In embodiments, the optical detector is a unique broadband optical detector.

In embodiments, the optical fiber arrangement further comprises an amplifying optical fiber coupled to the multi-clad optical fiber, such that the laser beam propagates in the amplifying optical fiber, wherein the amplifying optical fiber is configured to optically amplify the laser beam propagating in said amplifying optical fiber such that a ratio between an unamplified power peak and an amplified power peak of the laser beam is higher than 10, preferably higher than 1000.

In an embodiment, the unamplified power peak may be in the range [50 mW - 500 mW], and is amplified up to a power peak in the range [1W - 10 kW], preferably [100W- 10kW].

In embodiments, the amplifying optical fiber and the multi-clad optical fiber are optically coupled by a welding of the first end of the multi-clad fiber with an end of the amplifying optical fiber, in order to form a single optical fiber.

In embodiments, the amplifying optical fiber may be a ytterbium-doped fiber. In embodiments, the amplifying optical fiber may be optically pumped, for instance by a 60mW optical power. In embodiments, the amplifying optical fiber may be 5 meters long. In embodiments, the amplifying optical fiber may be either a simple clad fiber, or preferably a double clad fiber. In embodiments, the amplifying optical fiber may be arranged between the transceiver arrangement and the multi-clad optical fiber. In embodiments, the amplifying optical fiber is configured to amplify the first wavelength.

In embodiments, the light detecting system is a light detecting and ranging (LiDAR) system. For instance, the scanning unit may be configured to spatially scan areas in a spatial range comprised between 1m and 1km.

The invention namely provides an optical arrangement for a LiDAR, the optical arrangement being configured:
- to steer an illumination beam along an illumination optical path from a laser source to a target to be sensed, in a transmitting direction, and
- to transmit a reflected beam along a return optical path from the target to an optical detector, in a receiving direction, wherein the reflected beam comprises a reflection of the illumination beam on the target,
the optical arrangement comprising:
- a transceiver arrangement comprising a dichroic beamsplitter, the transceiver arrangement being configured for:
   * transmitting a monochromatic pulsed source beam from the laser source to a first end of an optical fiber arrangement, in one way selected among: through or by reflection on the dichroic beamsplitter, and
   * transmitting the reflected beam from said first end of the optical fiber arrangement to the optical detector in the other way selected among: through or by reflection on the dichroic beamsplitter,
- the optical fiber arrangement comprising a multi-clad optical fiber which comprises a core, at least one inner cladding, and an outer cladding; wherein
   said core is arranged to receive the pulsed source beam such that the source beam propagates in the core in said transmitting direction, and
   the core is further configured to generate a supercontinuum scanning beam from the pulsed source beam propagating in the core, and
   said at least one inner cladding is configured to receive the reflected beam, such that the reflected beam propagates in the inner cladding in said receiving direction,
- a scanning unit optically coupled to a second end of the optical fiber arrangement, the scanning unit being configured to steer the scanning beam to said target, and to receive the reflected beam from the target. In other words, the illumination beam is transformed while propagating in the core from monochromatic to supercontinuum.

The invention also provides a vehicle comprising a LiDAR system comprising an optical arrangement as described hereinabove.

The invention further provides the optical arrangement hereinabove described, but used for another kind of light detecting system than a LiDAR.

For instance, the optical arrangement is used in a spectral analysis and/or imaging system, for instance for microscopy and/or medical imaging. In such arrangement, the scanning unit may comprise a microscope head. For instance, the microscope head may be configured to be displaced in a step-by-step manner in order to spatially scan a two or a three-dimensional area. For instance, the area has a length of an order of magnitude of 0,5 cm, 1 cm or 5 cm.

The optical arrangement may also be used in Optical Coherence Tomography (OCT) systems. For instance, the OCT system may use a mode-locked laser as a laser source. For instance, the pulse repetition rate is in the order of magnitude of 10 MHz.

### Brief Description of Drawings

Other features, details and advantages will be shown in the following detailed description and on the figures, on which:
Fig. 1 is a functional schematic of a LiDAR comprising an optical arrangement according to an embodiment.
Fig. 2 is a functional schematic of a double-clad optical fiber used in the LiDAR of Fig. 1.
Fig. 3 is a functional schematic of a LiDAR comprising an optical arrangement according to an embodiment, with schematics of the spectra at different stages of propagation of ligth.
Fig. 4 represents a variant for a transmitter module for the optical arrangement of Figure 1.
Fig. 5 is a functional schematic of an imaging device for medical applications, comprising an optical arrangement according to a variant.

### Description of Embodiments

Figures and the following detailed description contain, essentially, some exact elements. They can be used to enhance understanding the invention and, also, to define the invention if necessary.

For the sake of conciseness, the elements which are similar or equivalent through the description will be described with reference to the same reference numbers.

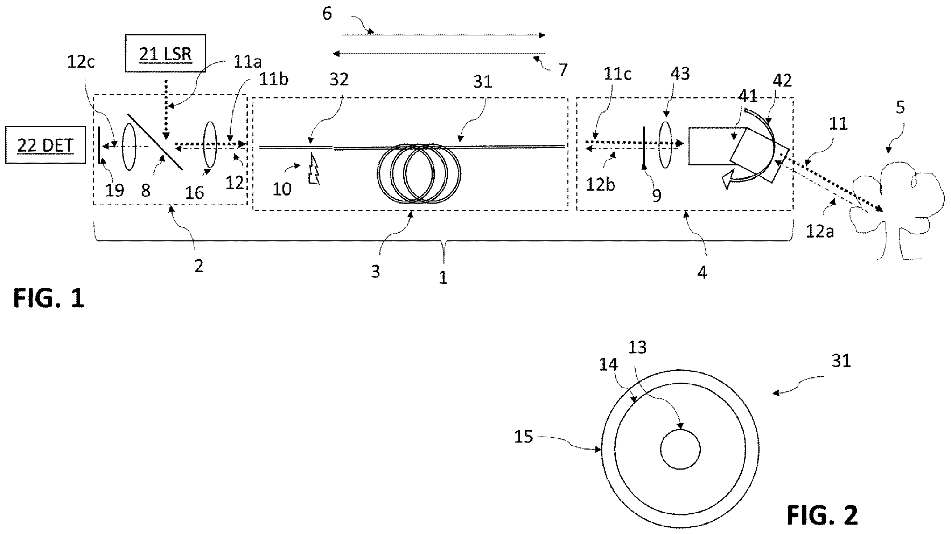

Figure 1 represents an optical arrangement 1 used in a LIDAR (Light Detection and Ranging System) for sensing a target 5.

The LiDAR includes a laser source 21, and an optical detector 22, which may comprise an optical sensor or a plurality of optical sensors. The laser source 21 emits scanning pulses. When a scanning pulse is reflected by the target 5, the LiDAR can determine the distance based on the time of flight of a return pulse received by the optical detector 22.

The LiDAR namely comprises the optical arrangement 1 for transmitting the scanning pulse from the laser source 21 to the target 5, and for transmitting the return pulse back from the target 5 to the detector 22.

In the following, the optical arrangement 1 will be described in more details.

The optical arrangement 1 comprises at least a transceiver arrangement 2, an optical fiber arrangement 3, and the scanning unit 4 as pictured on figure 1.

The scanning unit 4 is configured to steer the scanning pulse 11 in an orientable direction to the target 5 and to receive the return pulse 12 from the target 5 from said orientable direction.

The optical fiber arrangement 3 is configured to route the scanning pulse 11 from the laser source 21 to the scanning unit 4, and to route a return pulse 12 back through the double-clad fiber 31 to the detector 22. In other words, the scanning pulse 11 and the return pulse 12 share a same portion of optical path in two opposite directions, which will be further referred to as a scanning direction 6, and a sensing direction 7.

The transceiver arrangement 2 is configured to split in free space the optical paths of the scanning pulse 11 and the return pulse 12 in two non colinear optical paths corresponding to the optical path from the laser source 21 and the optical path to the optical detector 22. Such a splitting is performed by means of a dichroic beamsplitter 8, which is highly reflective (HR) for the wavelength of the scanning pulse 11and highly transmittive (HT) for the return pulse 12.

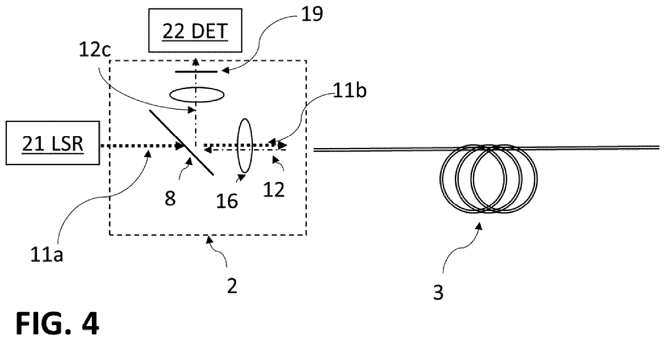

On the example pictured, the dichroic beamsplitter 8 is disposed with an angle of 45° by contrast with an output of the laser source 21, such that the scanning pulse 11 is deviated by an angle of 90° up to the optical fiber arrangement 3, whereas the return pulse 12 is not deviated on its travel to the optical detector 22, such that the optical paths are split in perpendicular optical paths 11a and 12c. One can see on Figure 4 that in a variant, the configuration may be exactly inversed by selecting an inverse beamsplitter 8 in order that the scanning pulse 11 is not deviated, whereas the return pulse 12 is.

One can provide a filter 19 between the beamsplitter 8 and the detector 22 in order to improve the spectral sensing of the return light.

A coupling lens 16 is arranged on the optical path 11b between the dichroic beam splitter 8 and the optical fiber arrangement 3, in order to collimate the laser light in both the scanning direction 6 and the sensing direction 7 from the free space to the optical fiber arrangement 3.

The optical fiber arrangement 3 comprises a double-clad optical fiber (DCF) 31 which will be described more in references with figure 2, and an amplifying fiber 32.

A DCF is an optical fiber with a structure consisting of three layers of optical material instead of the usual two. As one can see on Figure 2, the inner-most layer is a core 13. The core 13 is surrounded by an inner cladding 14, which is surrounded by an outer cladding 15. The three layers are made of materials with different refractive indices.

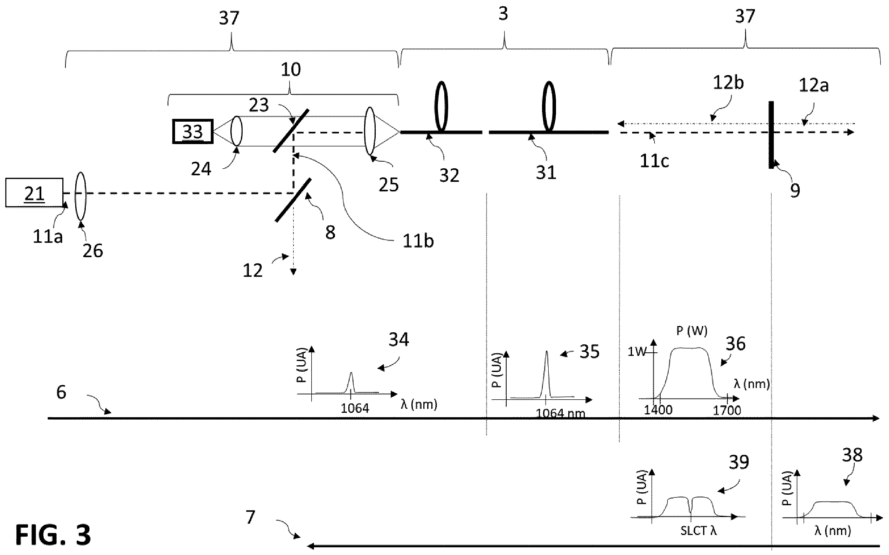

As one can see on figure 3, the spectrum shape of the scanning pulse 11 is transformed while traveling along the scanning direction 6, at different stages of propagation.

One can see on the figure different optical paths portions 11a, 11b and 11c for the scanning direction 6, and different optical paths portions 12a and 12b for the sensing direction 7.

The optical path portion 11a is the portion of the optical path comprised between the laser source 21 and the beamsplitter 8. The optical path portion 11b is the portion of the optical path comprised between the beamsplitter 8 and the optical fiber arrangement 3. The optical path portion 11c is the portion of the optical path comprised between the optical fiber arrangement 3 and the output of the scanning unit 4.

The optical path portion 12c is the portion of the optical path comprised between the optical fiber arrangement 3 and the optical detector 22.

One can see schemes 34, 35 and 36 of the spectrum of the scanning beam 11 for each stage of propagation through the optical path in the transmitting direction 6.

The laser source 21 is configured such that the scanning pulse 11 is a monochromatic laser beam on the optical path portion 11a, as represented by the spectrum 34. The narrow line is centered on 1064 nm and has a FWHM of 0,5 nm.

The core 13 has nonlinear properties, such that the DCF 31 is a supercontinuum (SC) fiber. In other words, the scanning pulse 11 propagates through the core 13 of the double-clad optical fiber 31 which is configured to spread the spectrum of said scanning pulse 11 such that it is transformed from monochromatic to supercontinuum, as represented by the spectrum 36. The supercontinuum extends at least from 1400nm to 1700nm.

The length of the DCF 31 may be preferably 10 meters. Indeed, the length of the DCF 31 should be selected such that nonlinear effects in the DCF 31 are sufficient to get a supercontinuum from a monochromatic laser pulse.

One can get such a result by selecting a DCF 31 such that a ratio of a P x L / D is above a threshold equal to 250W, wherein P denotes for a power peak at the entry of the multi-clad fiber, L denotes for a length of the multi-clad optical fiber, and D denotes for the diameter of the core 13.

The DCF 31 may be selected for instance in a set of Passive fibers referred on the optical component manufacturer Thorlabs ^{®} by the references P-6/125DC, P-10/125DC, P-20/400DC or P-25/250DC, which are optimized for coupling to active doped fibers for amplification. For instance, the diameters of the core 13, inner cladding 14 and outer cladding 15 may be selected in the following triplet values, in micrometers (µm): [diameter of (core, inner cladding, outer cladding)] = [(7, 125, 245), or (10,125, 245) or (20, 400, 520) or (25, 250, 350)], wherein the core diameter specification refers to the far-field mode field diameter at 1060 nm. For instance, the NA of the core 13 is selected in [0.12, 0.08, 0.07].

In general, the DCF 31 may present a cladding geometry of the DCF 31 which is round. The DCF 31 may present a numerical aperture (NA) for the inner cladding 14 above or equal to 0.48. The DCF 31 may present a coating material is a low-index acrylate. The diameter of the inner cladding 14 may be equal to or higher as ten times the diameter of the core 13. The NA of the core 13 may be lower as or equal to 1/4 of the NA of the inner cladding 14.

Prior to travel through the DCF 31, the scanning pulse 11 is amplified by the amplifying fiber 32, as represented by spectrum 35. Indeed, the scanning pulse 11 is required to have a sufficient power peak to enable the DCF 31 to apply nonlinear effects on the scanning pulse 11.

As one can see, the spectrum is more or less the same as the spectrum 35, but with an amplified power. For instance, the power peak is amplified by a factor 400.

The amplifying fiber 32 is an Ytterbium-doped (Yb-doped) fiber which is optically pumped as depicted by the symbol 10. The optical amplifying fiber 32 is fiber-coupled with the double-clad optical fiber 31. More precisely, one end of both the optical amplifying fiber 32 and the DCF 31 is meld with each other, such that the two optical fibers form a single long optical fiber.

The amplifying optical fiber is configured to amplify the optical power of the scanning beam 11, when optically pumped by an optical pump arrangement 10.

The amplifying fiber 32 may be preferably 5 meters long. Such a length enables the scanning pulse 11 to be enough pumped, from an unpumped peak power value around 250mW up to a pumped peak power value higher than 100W.

The amplifying fiber 32 may be selected in matching active fibers referred on the products of Thorlabs ^{®} by the references YB1200-6/125DC, YB1200-10/125DC, YB1200-20/400DC and respectively YB1200-25/250DC, which are compatible with the passive fibers described hereinabove (for instance YB1200-25/250DC is compatible with P-25/250DC as the core diameter and the inner cladding diameter have the same values).

In general, the amplifying fiber 32 is preferably selected in double-clad fibers, such that the amplifying fiber 32 has the same core diameter as the diameter of the core 13 of the DCF 31, and the same inner cladding diameter as the diameter of the inner cladding 14 of the DCF31. For instance, the inner cladding geometry is octagonal.

For instance, the diameters of the core, inner cladding and outer cladding may be selected in the following triplet values, in micrometers (µm): [diameter of (core, inner cladding, outer cladding)] = [(7, 125, 245), or (10,125, 245) or (20, 400, 520) or (25, 250, 350)], for an octagonal cladding measured flat to flat, wherein the core diameter specification refers to the far-field mode field diameter at 1060 nm.

For instance, the NA of the core 13 is selected in [0.12, 0.08, 0.07]. The coating material of the outer cladding 15 may be low-Index Acrylate. The cladding NA may be equal to or above 0,46 or 0,48. The cladding absorption at the wavelength of pumping 920 nm may be comprised between 5,5 µm and 2,3 µm.

The scanning pulse 11 travel continues after the stage of the optical fiber arrangement 3, to the scanning unit 4. One can see schemes 37 and 38 of the spectrum of the return pulse 12 for each stage of propagation through the optical path in the sensing direction 7.

The scanning unit 4 comprises a tunable notch 9, in order to remove a narrow band centered on a selectable wavelength from the supercontinuum spectrum.

The optical path portion 12a is the portion of the optical path comprised between the scanning unit 4 and the notch 9 on the sensing direction 7. The optical path portion 12b is the portion of the optical path comprised between the notch 9 and the optical fiber arrangement 3.

As one can see, and for the only sake of illustration, the spectrum 38 of the return pulse 12 is represented with the assumption that the target 5 is a perfect plan mirror. The spectrum 39 is the same as the spectrum 38, but with the narrow band removed.

By selecting successive different wavelength from the supercontinuum, on can spectrally scan the target 5. In a variant, one can replace the notch 9 by a bandpass filter. However, advantageously, using a notch 9 instead of a bandpass filter enables to use a maximum of the return power from the target 5.

The scanning unit 4 further comprises a f/2 lens 43, and a scanning header 41 which is spatially orientable, as pictured by the arrow 42.

As one can see, the f/2 lens 43 is used on the optical paths 11c et 12b, in order to collimate the return pulses 12 back into the optical fiber arrangement 3. For instance, the f/2 lens may be selected in the lenses referred by the reference AC127-019-C of the manufacturer Thorlabs ^{®}. Such a lens is an achromatic doublet, anti-reflective coated in the range 1050nm -1700nm. The focal distance may be 19 mm and the diameter 1,27 cm.

The scanning header 41 comprises optical components for steering the scanning pulse 11 in an orientable direction, in order to enable the LiDAR to spatially scan the target 5.

The foregoing discussion disclosed and describes merely exemplary embodiments of the present invention. One skilled in the art will readily recognize from such discussion and from the accompanying drawings and claims that various changes, modifications and variations can be made therein without departing from the spirit and scope of the invention as defined in the following claims.

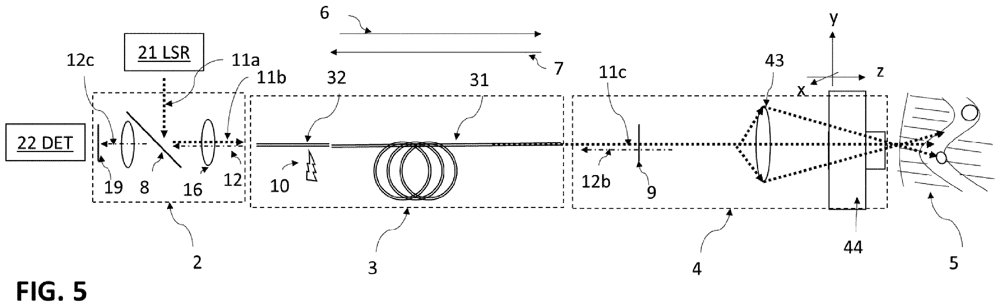

Namely, a light detecting system for medical applications, comprising an optical arrangement 1 according to a variant is represented with reference to Figure 5. As one can see, the target 5 represented on Figure 5 is a skin comprising a blood vein, which is imaged by the light detecting system.

Similarly to the example of Figure 1, the light detecting system comprises a laser source 21 and a optical detector 22 arranged with a dichroic beamsplitter 8 in front of the same optical fiber arrangement 3.. The laser source 21 and the optical detector 22 may operate for laser pulses in the short wave infrared (SWIR) range for instance.

As represented, the scanning unit may be different to the one of the optical arrangement 1 of the LiDAR of Figure 1. Indeed, the scanning unit 4 comprises a lens arrangement for collimating the light a short focal distance lower than 5 cm on the target 5.

The scanning unit namely comprises a microscope head 44 which is moveable in the 3 dimensions. The microscope head 44 is configured to record its 3D position for each measured location of the target 5, such that the optical detector 22 may associate the 3D coordinates with a lighting measurement.

## Claims

1. An optical arrangement (1) for a light detecting system, the optical arrangement (1) being configured:
- to steer an illumination beam (11) along an illumination optical path from a laser source (21) to a target (5) to be sensed, in a transmitting direction (6), and
- to transmit a reflected beam (12) along a return optical path from the target (5) to an optical detector (22), in a receiving direction (7), wherein the reflected beam comprises a reflection of the illumination beam (11) on the target (5),
the optical arrangement (1) comprising:
- a transceiver arrangement (2) comprising a dichroic beamsplitter (8), the transceiver arrangement (2) being configured for:
* transmitting a source beam (11a) from the laser source (21) to a first end of an optical fiber arrangement (3), in one way selected among: through or by reflection on the dichroic beamsplitter (8), and
* transmitting the reflected beam (12a) from said first end of the optical fiber arrangement (3) to the optical detector (22) in the other way selected among: through or by reflection on the dichroic beamsplitter (8),
- the optical fiber arrangement (3) comprising a multi-clad optical fiber (31) which comprises a core (13), at least one inner cladding (14), and an outer cladding (15); wherein
said core (12) is arranged to receive the source beam having a first wavelength, such that the source beam propagates in the core (13) in said transmitting direction, and
the core is further configured to generate a scanning beam from the source beam (11a) propagating in the core, wherein the scanning beam comprises at least a second wavelength which is different from the first wavelength, and
said at least one inner cladding (14) is configured to receive the reflected beam (12), comprising the at least second wavelength, such that the reflected beam propagates in the inner cladding in said receiving direction (7),
- a scanning unit (4) optically coupled to a second end of the optical fiber arrangement, the scanning unit being configured to steer the scanning beam to said target (5), and to receive the reflected beam from the target (5).

2. An optical arrangement (1) according to claim 1, wherein the light detecting system is a light detecting and ranging (LiDAR) system and the source beam (11a) is a pulsed laser beam.

3. An optical arrangement (1) according to claim 2, wherein the source beam (11a) at the first end of an optical fiber arrangement (3) is a monochromatic pulsed beam centered on the first wavelength, and having a full width at half maximum (FWHM) lower as 10nm, preferably lower as 1nm.

4. An optical arrangement (1) according to claim 2 or 3, wherein the at least second wavelength is shifted from the first wavelength by at least 300 nm.

5. An optical arrangement (1) according to one of claim 2 to 4, wherein the first wavelength is 1064nm.

6. An optical arrangement (1) according to one of claim 2 to 5, wherein the dichroic beamsplitter (8) has a high transmittance (HT) for wavelength higher as 1100 nm and a high reflectivity for wavelengths lower as 1100nm.

7. An optical arrangement (1) according to one of claim 2 to 6, wherein the core is further configured to generate a supercontinuum in a range comprising the second wavelength.

8. An optical arrangement (1) according to one of claim 2 to 7, wherein the supercontinuum comprises at least the spectral range of [1450 nm-1650 nm], preferably a larger spectral range, such as for instance [1400 nm - 1700 nm].

9. An optical arrangement (1) according to one of claim 4 to 8 in combination with claim 3, wherein the multi-clad optical fiber (31) is selected such that a ratio of a P x L / D is above a threshold equal to 250W, wherein P denotes for a power peak of light of the monochromatic pulsed beam at one end of the multi-clad fiber, L denotes for a length of the multi-clad optical fiber, and D denotes for the diameter of the core (13) of the multi-clad optical fiber.

10. An optical arrangement (1) according to one of claim 2 to 9, further comprising a notch filter (9, 19) or a wavelength bandpass filter arranged on the return optical path.

11. An optical arrangement (1) according to claim 10, wherein the notch filter (9, 19) or the wavelength bandpass filter is wavelength-tunable.

12. An optical arrangement (1) according to one of claim 2 to 11, wherein the optical fiber arrangement (3) further comprises an amplifying optical fiber (32) coupled to the multi-clad optical fiber, such that the laser beam propagates in the amplifying optical fiber, wherein the amplifying optical fiber is configured to optically amplify the laser beam propagating in said amplifying optical fiber such that a ratio between an unamplified power peak and an amplified power peak of the laser beam is higher than 10, preferably higher than 1000.

13. An optical arrangement (1) according to claim 12, wherein the amplifying optical fiber (32) and the multi-clad optical fiber (31) are optically coupled by a welding of the first end of the multi-clad fiber with an end of the amplifying optical fiber, in order to form a single optical fiber.

14. An optical arrangement (1) according to claim 1, wherein the light detecting system is a spectral analysis and/or imaging system.

15. A vehicle comprising a LiDAR system comprising an optical arrangement according to one of claim 2 to 13.

## Patentansprüche

1. Eine optische Anordnung (1) für ein Lichterkennungssystem, wobei die optische Anordnung (1) konfiguriert ist:
- zum Lenken eines Beleuchtungsstrahls (11) entlang eines optischen Beleuchtungspfads von einer Laserquelle (21) zu einem zu erfassenden Ziel (5) in einer Senderichtung (6), und
- zum Senden eines reflektierten Strahls (12) entlang eines optischen Rückpfads vom Ziel (5) zu einem optischen Detektor (22) in einer Empfangsrichtung (7), wobei der reflektierte Strahl eine Reflexion des Beleuchtungsstrahls (11) auf dem Ziel (5) umfasst,
wobei die optische Anordnung (1) umfasst:
- eine Sendeempfängeranordnung (2), die einen dichroitischen Strahlteiler (8) umfasst, wobei die Sendeempfängeranordnung (2) konfiguriert ist:
- zum Senden eines Quellstrahls (11a) von der Laserquelle (21) zu einem ersten Ende einer Lichtwellenleiteranordnung (3), in die eine Richtung, die ausgewählt ist aus: durch oder per Reflexion auf dem dichroitischen Strahlteiler (8), und
- zum Senden des reflektierten Strahls (12a) von dem ersten Ende der Lichtwellenleiteranordnung (3) zu dem optischen Detektor (22), in die andere Richtung, die ausgewählt ist aus: durch oder per Reflexion auf dem dichroitischen Strahlteiler (8),
- wobei die Lichtwellenleiteranordnung (3) einen mehrfach ummantelten Lichtwellenleiter (31) umfasst, der einen Kern (13), mindestens eine innere Ummantelung (14) und eine äußere Ummantelung (15) umfasst; wobei
der Kern (12) so angeordnet ist, dass er den Quellstrahl mit einer ersten Wellenlänge so empfängt, dass sich der Quellstrahl im Kern (13) in der Senderichtung ausbreitet, und
der Kern ferner so konfiguriert ist, dass er einen Abtaststrahl aus dem sich im Kern ausbreitenden Quellstrahl (11a) erzeugt, wobei der Abtaststrahl mindestens eine zweite Wellenlänge umfasst, die sich von der ersten Wellenlänge unterscheidet, und
die mindestens eine innere Ummantelung (14) so konfiguriert ist, dass sie den reflektierten Strahl (12) empfängt, der die mindestens zweite Wellenlänge umfasst, so dass sich der reflektierte Strahl in der inneren Ummantelung in der Empfangsrichtung (7) ausbreitet,
- eine Abtasteinheit (4), die optisch mit einem zweiten Ende der Lichtwellenleiteranordnung gekoppelt ist, wobei die Abtasteinheit so konfiguriert ist, dass sie den Abtaststrahl auf das Ziel (5) lenkt und den reflektierten Strahl vom Ziel (5) empfängt.

2. Optische Anordnung (1) nach Anspruch 1, wobei das Lichterkennungssystem ein lichtgestütztes Abstandsmesssystem (LiDAR) und der Quellstrahl (11a) ein gepulster Laserstrahl ist.

3. Optische Anordnung (1) nach Anspruch 2, wobei der Quellstrahl (11a) am ersten Ende einer Lichtwellenleiteranordnung (3) ein monochromatischer gepulster Strahl ist, der auf der ersten Wellenlänge zentriert ist und eine Halbwertsbreite (FWHM) von weniger als 10 nm, vorzugsweise von weniger als 1 nm aufweist.

4. Optische Anordnung (1) nach Anspruch 2 oder 3, wobei die mindestens zweite Wellenlänge von der ersten Wellenlänge um mindestens 300 nm verschoben ist.

5. Optische Anordnung (1) nach einem der Ansprüche 2 bis 4, wobei die erste Wellenlänge 1064 nm beträgt.

6. Optische Anordnung (1) nach einem der Ansprüche 2 bis 5, wobei der dichroitische Strahlteiler (8) einen hohen Transmissionsgrad (HT) für Wellenlängen größer als 1100 nm und ein hohes Reflexionsvermögen für Wellenlängen kleiner als 1100 nm aufweist.

7. Optische Anordnung (1) nach einem der Ansprüche 2 bis 6, wobei der Kern ferner so konfiguriert ist, dass er ein Superkontinuum in einem Bereich erzeugt, der die zweite Wellenlänge umfasst.

8. Optische Anordnung (1) nach einem der Ansprüche 2 bis 7, wobei das Superkontinuum mindestens den Spektralbereich von [1450 nm - 1650 nm], vorzugsweise einen größeren Spektralbereich, wie beispielsweise [1400 nm - 1700 nm], umfasst.

9. Optische Anordnung (1) nach einem der Ansprüche 4 bis 8 in Kombination mit Anspruch 3, wobei der mehrfach ummantelte Lichtwellenleiter (31) so ausgewählt ist, dass ein Verhältnis von P x L/D über einem Schwellenwert von 250 W liegt, wobei P eine Leistungsspitze des Lichts des monochromatischen gepulsten Strahls an einem Ende der mehrfach beschichteten Faser, L eine Länge des mehrfach ummantelten Lichtwellenleiters und D den Durchmesser des Kerns (13) des mehrfach ummantelten Lichtwellenleiters bezeichnet.

10. Optische Anordnung (1) nach einem der Ansprüche 2 bis 9, ferner umfassend einen Kerbfilter (9, 19) oder einen auf dem optischen Rückpfad angeordneten Wellenlängen-Bandpassfilter.

11. Optische Anordnung (1) nach Anspruch 10, wobei der Kerbfilter (9, 19) oder der Wellenlängen-Bandpassfilter in der Wellenlänge durchstimmbar ist.

12. Optische Anordnung (1) nach einem der Ansprüche 2 bis 11, wobei die Lichtwellenleiteranordnung (3) ferner einen verstärkenden Lichtwellenleiter (32) umfasst, der mit dem mehrfach ummantelten Lichtwellenleiter gekoppelt ist, so dass sich der Laserstrahl im verstärkenden Lichtwellenleiter ausbreitet, wobei der verstärkende Lichtwellenleiter so konfiguriert ist, dass er den sich im verstärkenden Lichtwellenleiter ausbreitenden Laserstrahl optisch verstärkt, sodass ein Verhältnis zwischen einer nicht verstärkten Leistungsspitze und einer verstärkten Leistungsspitze des Laserstrahls größer als 10 ist, vorzugsweise größer als 1000.

13. Optische Anordnung (1) nach Anspruch 12, wobei der verstärkende Lichtwellenleiter (32) und der mehrfach ummmantelte Lichtwellenleiter (31) durch eine Verschweißung des ersten Endes des mehrfach ummantelten Lichtwellenleiters mit einem Ende des verstärkenden Lichtwellenleiters optisch gekoppelt sind, um einen einzigen Lichtwellenleiter zu bilden.

14. Optische Anordnung (1) nach Anspruch 1, wobei das Lichterfassungssystem ein Spektralanalyse- und/oder Bildgebungssystem ist.

15. Fahrzeug, das ein LiDAR-System umfasst, das eine optische Anordnung nach einem der Ansprüche 2 bis 13 umfasst.

## Revendications

1. Agencement optique (1) pour un système de détection de lumière, l'agencement optique (1) étant configuré :
- pour diriger un faisceau d'illumination (11) le long d'un chemin optique d'illumination depuis une source laser (21) vers une cible (5) à capter, dans une direction d'émission (6), et
- pour émettre un faisceau réfléchi (12) le long d'un chemin optique de retour depuis la cible (5) vers un détecteur optique (22), dans une direction de réception (7), dans lequel le faisceau réfléchi comprend une réflexion du faisceau d'illumination (11) sur la cible (5),
l'agencement optique (1) comprenant :
- un agencement émetteur-récepteur (2) comprenant un diviseur de faisceau dichroïque (8), l'agencement émetteur-récepteur (2) étant configuré pour :
- émettre un faisceau source (11a) depuis la source laser (21) vers une première extrémité d'un agencement de fibres optiques (3), d'une manière choisie parmi : via ou par réflexion sur le diviseur de faisceau dichroïque (8), et
- émettre le faisceau réfléchi (12a) depuis ladite première extrémité de l'agencement de fibres optiques (3) vers le détecteur optique (22) de l'autre manière choisie parmi : via ou par réflexion sur le diviseur de faisceau dichroïque (8),
- l'agencement de fibres optiques (3) comprenant une fibre optique à gaines multiples (31) qui comprend un noyau (13), au moins une gaine intérieure (14), et une gaine extérieure (15) ; dans lequel
ledit noyau (12) est agencé pour recevoir le faisceau source ayant une première longueur d'onde, de sorte que le faisceau source se propage dans le noyau (13) dans ladite direction d'émission, et
le noyau est en outre configuré pour générer un faisceau de balayage depuis le faisceau source (11a) se propageant dans le noyau, dans lequel le faisceau de balayage comprend au moins une deuxième longueur d'onde qui est différente de la première longueur d'onde, et
ladite au moins une gaine intérieure (14) est configurée pour recevoir le faisceau réfléchi (12), comprenant l'au moins deuxième longueur d'onde, de sorte que le faisceau réfléchi se propage dans la gaine intérieure dans ladite direction de réception (7),
- une unité de balayage (4) couplée optiquement à une deuxième extrémité de l'agencement de fibres optiques, l'unité de balayage étant configurée pour diriger le faisceau de balayage vers ladite cible (5), et pour recevoir le faisceau réfléchi de la cible (5).

2. Agencement optique (1) selon la revendication 1, dans lequel le système de détection de lumière est un système de détection et de portée de lumière (LiDAR) et le faisceau source (11a) est un faisceau laser pulsé.

3. Agencement optique (1) selon la revendication 2, dans lequel le faisceau source (11a) à la première extrémité d'un agencement de fibres optiques (3) est un faisceau pulsé monochromatique centré sur la première longueur d'onde, et ayant une largeur totale à mi-hauteur (LTMH) inférieure à 10 nm, de préférence inférieure à 1 nm.

4. Agencement optique (1) selon la revendication 2 ou 3, dans lequel l'au moins deuxième longueur d'onde est décalée d'au moins 300 nm par rapport à la première longueur d'onde.

5. Agencement optique (1) selon l'une des revendications 2 à 4, dans lequel la première longueur d'onde est de 1064 nm.

6. Agencement optique (1) selon l'une des revendications 2 à 5, dans lequel le diviseur de faisceau dichroïque (8) a une transmittance élevée (HT) pour des longueurs d'onde supérieures à 1100 nm et une réflectivité élevée pour des longueurs d'onde inférieures à 1100 nm.

7. Agencement optique (1) selon l'une des revendications 2 à 6, dans lequel le noyau est en outre configuré pour générer un supercontinuum dans une plage comprenant la deuxième longueur d'onde.

8. Agencement optique (1) selon l'une des revendications 2 à 7, dans lequel le supercontinuum comprend au moins la plage spectrale de [1450 nm à 1650 nm], de préférence une plage spectrale plus grande, telle que par exemple [1400 nm à 1700 nm].

9. Agencement optique (1) selon l'une des revendications 4 à 8 en combinaison avec la revendication 3, dans lequel la fibre optique à gaines multiples (31) est sélectionnée de sorte qu'un rapport P x L/D soit au-dessus d'un seuil égal à 250 W, dans lequel P désigne un pic de puissance de lumière du faisceau pulsé monochromatique à une extrémité de la fibre à gaines multiples, L désigne une longueur de la fibre optique à gaines multiples, et D désigne le diamètre du noyau (13) de la fibre optique à gaines multiples.

10. Agencement optique (1) selon l'une des revendications 2 à 9, comprenant en outre un filtre à encoche (9, 19) ou un filtre passe-bande de longueur d'onde agencé sur le chemin optique de retour.

11. Agencement optique (1) selon la revendication 10, dans lequel le filtre à encoche (9, 19) ou le filtre passe-bande de longueur d'onde est ajustable en longueur d'onde.

12. Agencement optique (1) selon l'une des revendications 2 à 11, dans lequel l'agencement de fibres optiques (3) comprend en outre une fibre optique d'amplification (32) couplée à la fibre optique à gaines multiples, de sorte que le faisceau laser se propage dans la fibre optique d'amplification, dans lequel la fibre optique d'amplification est configurée pour amplifier optiquement le faisceau laser se propageant dans ladite fibre optique d'amplification de sorte qu'un rapport entre un pic de puissance non amplifié et un pic de puissance amplifié du faisceau laser soit supérieur à 10, de préférence supérieur à 1000.

13. Agencement optique (1) selon la revendication 12, dans lequel la fibre optique d'amplification (32) et la fibre optique à gaines multiples (31) sont couplées optiquement par un soudage de la première extrémité de la fibre à gaines multiples avec une extrémité de la fibre optique d'amplification, afin de former une seule fibre optique.

14. Agencement optique (1) selon la revendication 1, dans lequel le système de détection de lumière est un système d'analyse spectrale et/ou d'imagerie.

15. Véhicule comprenant un système LiDAR comprenant un agencement optique selon l'une des revendications 2 à 13.
